# EUROPEAN PATENT SPECIFICATION

(11) **EP 0 410 048 B1**
(45) Date of publication and mention of the grant of the patent: **22.12.1993**
(21) Application number: 89203081.8
(22) Date of filing: 05.12.1989
(51) Int. Cl.: H02K 1/27

(54) **Method for fixing permanent magnets on rotors of brushless motors and relevant product**
Verfahren zum Befestigen von Dauermagneten am Läufer von bürstenlosen Motoren und gleichartigem Produkt
Procédé pour fixer des aimants permanents sur les rotors de moteurs sans balais et produit similaire

(30) Priority: 28.07.1989 IT 6764189
(43) Date of publication of application: 30.01.1991
(73) Proprietor: LAFERT-SELCA S.r.l., I-30027 SAN DONA' DEL PIAVE (VE) (IT)
(72) Inventor: Pilati, Romano, I-10018 Pavone Cavense (TO) (IT)
(74) Representative: Lotti, Giorgio

(56) References cited:
- US-A- 4 855 630
- PATENT ABSTRACTS OF JAPAN vol. 10, no. 46 (E-383)(2103) 22 February 1986, & JP-A-60 200753 (FANUC K.K.) 11 October 1985,
- PATENT ABSTRACTS OF JAPAN vol. 9, no. 197 (E-335)(1920) 14 August 1985, & JP-A-60 062859 (MORIYAMA KOGYO K.K.) 11 April 1985,

## Description

The present invention relates to a method for fixing permanent magnets on rotors of brushless motors and relevant product.

The permanent magnets of a rotor usually consist of bars in various sizes which are to be glued onto the surface of the rotor and then magnetized on the spot.

Thereafter they are wrapped in a band of fiberglass or similar material that prevents them from coming off when the motor is on.

Magnetizing the bars, once they are glued on the rotor, is a rather complex operation. Furthermore, magnetic field are generated, which interfere in the areas where positive and negative polarizations are close.

These magnetic field are obviously harmful to the motor operation in that the bars are magnetized in the best way if they are magnetized one by one or, anyway, if just one pole is magnetized.

The assembly operation, that is already expensive having to magnetize the bars on the rotor, is made even more costly by the need of band-wrapping the magnets to prevent them from coming off owing to the centrifugal force which they are subject to during operation.

A magnetic field rotor is known from JP-A-60200753.

This document discloses a rotor having four permanent magnets secured by an adhesive to the outer periphery of a drum. A sheetlike binder is wound around the magnets also covering peripheral axial slots in which the binder is secured by longitudinal holding members.

It is an object of this invention to propose a method for fixing the magnets on the rotor that can overcome the above mentioned drawbacks.

Therefore, the present invention proposes that the bars should be magnetized before fixing them to the rotor, glueing them in groups to sheet metal parts (thus forming positive or negative poles) and only afterwards to the surface of the rotor.

The first advantage offered by this method is to be found in the previous automatic magnetization of the bars which is much simpler and quicker. Maximum magnetic saturation of the bars is obtained owing to the single-pole system.

Moreover, band-wrapping becomes unnecessary as the outer sheet parts fix the magnets to the rotor in a permanent way, and are much more resistant and reliable in time than any other band-wrapping system now in use.

With the above and other objects in view which will appear as the description proceeds, this invention provides a method and apparatus according to claims 1 and 4.

The invention is described hereunder referring to the enclosed drawings, in which:
- Fig. 1: is a partial front view of a rotor made according to this invention;
- Fig. 2: is a partially sectioned side view of the rotor of fig. 1;
- Fig. 3: is an enlarged view of part A, fig. 1;
- Fig. 4: is a partial front view of a rotor obtained according to a slightly different method proposed by this invention;
- Fig. 5: is a side view with a partial axial section of the rotor of fig. 4; and
- Fig. 6: is an enlarged view of part B, fig. 4.

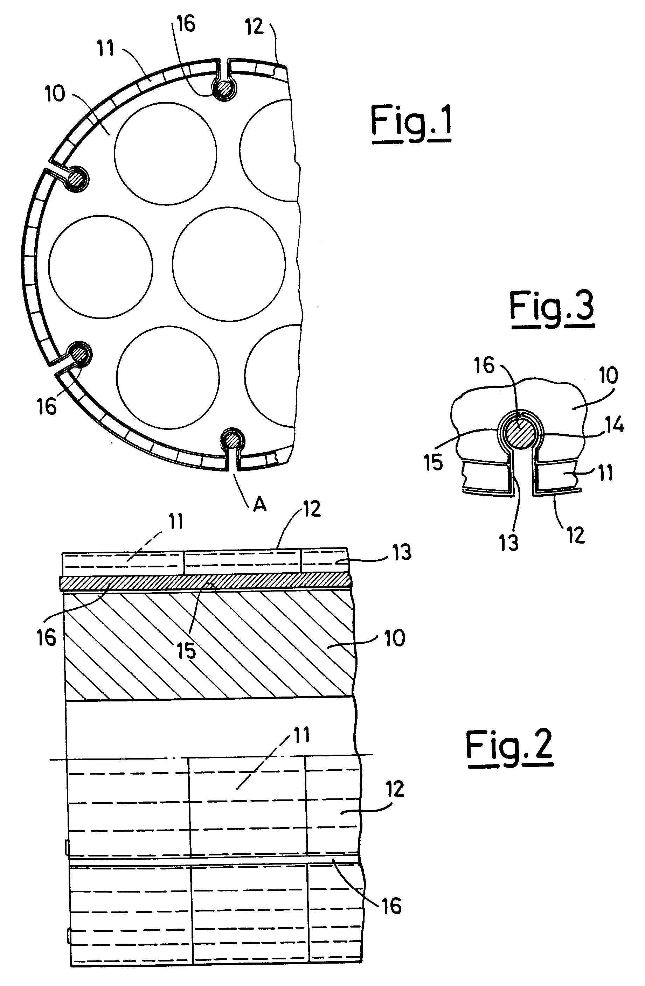

In a rotor finished according to this invention, referring to the embodiment of figs. 1-3, a plurality of bars 11 made out of a magnetizable material are fixed to the circumferential surface of rotor body 10.

The bars are divided in groups and each group is contained within turned up longitudinal edges 13 of a sheet part 12, preferably metal, that covers them.

The longitudinal edges 13 of sheet parts 12 have turned tips 14 that are inserted in longitudinal peripheral slots 15 obtained in the circumferential surface of the rotor body 10. The sheet parts 12 are as wide as together to extend around the circumferential surface of the rotor, each between two adjacent slots 15.

Keys 16 are inserted in the slots 15 so as to lock the tips 14 of sheet parts 12 in position and prevent them from sliding both radially and axially whereas.

According to the method proposed by this invention, at first groups of magnetizable bars 11 are fitted adjacent eachother between the longitudinal edges 13 of sheet parts 12. Then each group of bars 11 is magnetized separately and homogeneously with either positive or negative polarity. Afterwards, the groups of bars with their sheet parts are positioned around the rotor body 10 to be fixed thereto.

A thin layer of glue is then applied between the circumferential surface of the rotor 10 and each group of bars 11 to prevent the bars from sliding.

The tips 14 of the edges 13 are then inserted in the slots, and finally, the keys 16 are inserted in slots 15 to lock the tips 14 of sheet parts 12 permanently and prevent them from coming off the rotor because of the centrifugal force that occurs during rotation.

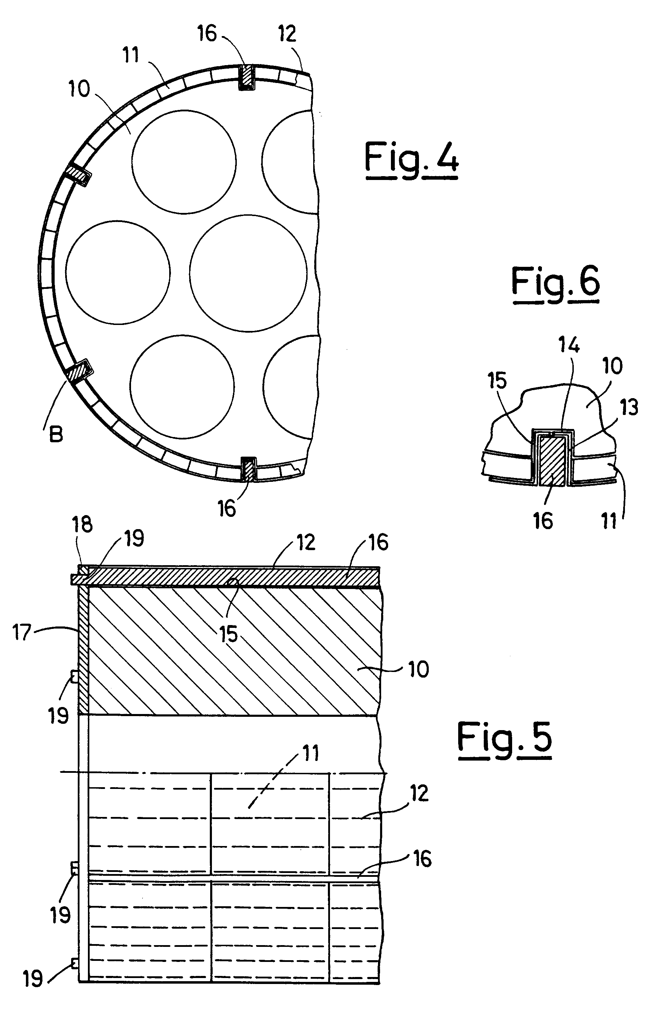

In an alternative embodiment (see figs. 4-6), the slots 15 are square rather than round and so are the tips 14 of sheet parts 12 and keys 16.

In this case, keep plates 17 are fitted to each end of the rotor. The periphery of plates 17 is provided with a plurality of axially disposed slots 18 in which small section longitidinal ends 19 of the keys 16 are inserted. The keep plates 17 are fitted to the ends of rotor body 10 to lock the keys 16 in their seat and prevent the bars 11 from sliding out axially.

Both of the above alternative solutions permit a highly resistant and reliable fixing of the magnets which undergo centrifugal forces. As a matter of fact, the resisting section of the various sectors undergoes mainly traction forces.

Fixing the magnets by this essentially mechanical method results in constant seal in comparison with the continuous variation of operation temperature which can normally rise up to 150 degrees Celsius. The compact structure also permits to reduce the air gap between rotor and stator to a minimum of 0,4-0,5 mm.

## Claims

1. A method for fixing permanent magnets to rotors of brushless motors, of the kind comprising a cylindrical rotor body (10) having its circumferential surface substantially covered with magnets (11); a sheet-like material (12) covering the outer periphery of the magnets and being secured to the rotor body (10) by means of keys (16) inserted in a plurality of longitudinal peripheral slots (15) in the circumferential surface of the rotor body (10); characterised in that it comprises the following steps:
a) realizing a plurality of bars (11) made of a magnetizable material, sufficient to substantially cover the circumferential surface of the rotor body (10);
b) fitting groups of adjacent bars (11) longitudinally disposed between turned up longitudinal edges (13) of a plurality of sheet metal parts (12) being as long as the rotor and as wide as together to extend around the whole circumferential surface of the rotor each between two adjacent slots (15), said edges (13) being turned up towards the bars (11);
c) separately magnetizing each group of adjacent bars (11) with homogeneous polarity;
d) positioning the groups around the circumferential surface of the rotor body (10);
e) inserting the tips (14) of said edges (13) in said slots (15), with the bars (11) between the sheet part (12) and the surface of the rotor (10);
f) locking the tips (14) of the edges (13) of said sheet parts (12) to the rotor body (10) by inserting keys (16) in said rotor slots (15).

2. A method according to claim 1, characterised in that it also comprises the further step of:
g) locking the keys (16) axially in said rotor slots (15) by fitting a keep plate (17) to their ends (19) at each end of the rotor.

3. A method according to claim 1, characterised in that, following step c), a thin layer of glue is applied between the circumferential surface of the rotor (10) and each group of bars (11).

4. A brushless motor rotor of the kind comprising a cylindrical rotor body (10) having its circumferential surface substantially covered with magnets (11); a sheet-like material (12) covering the outer periphery of the magnets and being secured to the rotor body (10) by means of keys (16) inserted in a plurality of longitudinal peripheral slots (15) in the circumferential surface of the rotor body (10); characterised in that the magnets are formed by groups of adjacent longitudinally disposed bars (11) magnetized with homogeneous polarity, each group being fitted between turned up longitudinal edges (13) of a plurality of sheet metal parts (12) being as long as the rotor and as wide as together to extend around the whole circumferential surface of the rotor each between two adjacent slots (15); said edges (13) being turned up towards the bars (11) and having turned tips (14) suitable to be locked inside said slots (15) by said keys (16).

5. A rotor according to claim 4, characterised in that the tips (14) of said longitudinal edges (13) of two adjacent sheet metal parts are locked within one of said slots (15).

6. A rotor according to claim 5, characterised in that the tips (14) of said edges (13) are curved so as to copy the surface of said slots (15), which are curved too.

7. A rotor according to claim 5, characterised in that said tips (14) are square as well as the slots (15) and the keys (16); the ends (19) of keys (16) being locked axially and radially within axially disposed slots (18) in keep plates (17) fitted at each end of the rotor.

8. A rotor according to claim 4, characterised in that said longitudinal peripheral slots (15) are disposed at an angular spacing of 60 degrees around the circumferential surface of the rotor body (10).

## Patentansprüche

1. Verfahren zum Befestigen von Dauermagneten am Läufer von bürstenlosen Motoren, die einen zylindrischen Läuferkörper (10) mit einer mit Magneten (11) im wesentlichen bedeckten Umfangsfläche enthalten, wobei ein blattartiges Material (12) den äußeren Umfang der Magneten bedeckt und an dem Läuferkörper (10) mittels Längskeilen (16) befestigt ist, die in mehrere Umfangs-Längsschlitze (15) in der Umfangsfläche des Läuferkörpers (10) eingelegt werden,
**dadurch gekennzeichnet,** daß
es die folgenden Schritte umfaßt:
a) Zur Verfügung stellen von mehreren aus einem magnetisierbaren Material hergestellten Stäben (11), die ausreichen, um die Umfangsfläche des Läuferkörpers (10) im wesentlichen zu bedecken;
b) Zusammensetzen von Gruppen aus benachbarten Stäben (11), die längs zwischen aufgebogenen Längseinfassungen (13) mehrerer Blechteile (12) angeordnet sind, welche genau so lang wie der Läufer sind und so breit sind, daß sie sich zusammen um die gesamte Umfangsfläche des Läufers erstrecken, wobei sich jedes Blechteil zwischen zwei benachbarten Schlitzen (15) befindet und die genannten Einfassungen (13) in Richtung der Stäbe (11) aufgebogen sind;
c) Magnetisieren jeder Gruppe aus benachbarten Stäben (11) einzeln mit homogener Polarität;
d) Positionieren der Gruppen um die Umfangsfläche des Läuferkörpers (10) herum;
e) Einlegen der Spitzen (14) der genannten Einfassungen (13) in die genannten Schlitze (15), wobei die Stäbe (11) zwischen dem Blechteil (12) und der Oberfläche des Läufers (10) liegen;
f) Verriegeln der Spitzen (14) der Einfassungen (13) der genannten Blechteile (12) mit dem Läuferkörper (10) durch Einlegen der Längskeile (16) in die genannten Rotorschlitze (15).

2. Verfahren nach Anspruch 1,
**dadurch gekennzeichnet,** daß
es auch den zusätzlichen Schritt umfaßt, bestehend aus:
g) Verriegeln der Längskeile (16) in axialer Richtung in den genannten Läuferschlitzen (15) durch Anpassen einer Halteplatte (17) an ihre Enden (19) an jedem Ende des Läufers.

3. Verfahren nach Anspruch 1,
**gekennzeichnet** durch
den folgenden Schritt
c) eine dünne Klebstoffschicht wird zwischen der Umfangsfläche des Läufers (10) und jeder Gruppe von Stäben (11) aufgebracht.

4. Ein bürstenloser Motorläufer, der einen zylindrischen Läuferkörper (10) mit einer mit Magneten (11) im wesentlichen bedeckten Umfangsfläche enthält, wobei ein blattartiges Material (12) den äußeren Umfang der Magneten bedeckt und an dem Läuferkörper (10) mittels Längskeilen (16) befestigt ist, welche in mehrere Umfangs-Längsschlitze (15) in der Umfangsfläche des Läuferkörpers (10) eingelegt werden,
**dadurch gekennzeichnet,** daß
die Magnete aus Gruppen benachbarter, längs angeordneter Stäbe (11) bestehen, die mit homogener Polarität magnetisiert sind, jede Gruppe zwischen aufgebogenen Längseinfassungen (13) mehrerer Blechteile (12) eingepaßt ist, die so lang wie der Läufer sind und so breit sind, daß sie sich zusammen um die gesamte Umfangsfläche des Läufers erstrecken, wobei sich jedes Blechteil zwischen zwei benachbarten Schlitzen (15) befindet, und daß die Einfassungen (13) in Richtung der Stäbe (11) gebogen sind und gebogene Spitzen (14) aufweisen, die innerhalb der genannten Schlitze (15) mittels der genannten Längskeile (16) zweckmäßig verriegelt werden können.

5. Läufer nach Anspruch 4,
**dadurch gekennzeichnet,** daß
die Spitzen (14) der genannten Längseinfassungen (13) zweier benachbarter Blechteile innerhalb von einem der genannten Schlitze (15) verriegelt sind.

6. Läufer nach Anspruch 5,
**dadurch gekennzeichnet,** daß
die Spitzen (14) der genannten Einfassungen (13) gekrümmt sind, um die Oberfläche der genannten Schlitze (15), die auch gekrümmt sind, nachzubilden.

7. Läufer nach Anspruch 5,
**dadurch gekennzeichnet,** daß
die genannten Spitzen (14) ebenso wie die Schlitze (15) und die Längskeile (16) viereckig sind und die Enden (19) der Längskeile (16) axial und radial innerhalb axial angeordneter Schlitze (18) in Halteplatten (17), die an jedem Ende des Läufers angepaßt sind, verriegelt sind.

8. Läufer nach Anspruch 4,
**dadurch gekennzeichnet,** daß
die genannten Umfangs-Längsschlitze (15) mit einer Winkelunterteilung von 60° um die Umfangsfläche des Läuferkörpers (10) herum angeordnet sind.

## Revendications

1. Procédé pour fixer des aimants permanents sur les rotors de moteur sans balai du type comprenant un corps de rotor cylindrique (10), ayant sa surface périphérique sensiblement recouverte d'aimants (11), un matériau en feuille (12) recouvrant la périphérie extérieure des aimants et fixé au corps du rotor (10) par des clavettes (16) insérées dans une pluralité d'entailles longitudinales périphériques (15) sur la surface périphérique du corps du rotor (10), caractérisé en ce qu'il comprend les étapes suivantes :
a) réaliser une pluralité suffisante de barres (11) en matériau magnétique, pour recouvrir sensiblement la surface périphérique du corps du rotor (10) ;
b) ajuster des groupes de barres (11) adjacentes disposées longitudinalement entre des bords rabattus longitudinaux (13) d'une pluralité de parties métalliques en feuille (12) qui sont aussi longues que le rotor et qui ont une largeur telle que mises ensemble elles s'étendent tout autour de la surface périphérique du rotor, chacune d'elles entre deux entailles adjacentes (15), lesdits bords (13) étant retournés vers les barres (11) ;
c) aimanter séparément chacun des groupes de barres adjacentes (11) selon une polarité homogène ;
d) disposer les groupes autour de la surface périphérique du corps du rotor (10) ;
e) insérer les extrémités (14) des bords (13) dans les entailles (15), de sorte que les barres (11) soient disposées entre la partie en feuille (12) et la surface du rotor (10) ;
f) bloquer les extrémités (14) des bords (13) de ces parties en feuille (12) au corps du rotor (10) par l'insertion de clavettes (16) dans les entailles (15) du rotor.

2. Procédé selon la revendication 1, caractérisé en ce qu'il comprend aussi la nouvelle étape de :
g) bloquer axiallement les clavettes (16) à leur extrémité (19) dans les entailles (15) du rotor en mettant en place à chaque extrémité du rotor une plaque de maintien (17).

3. Procédé selon la revendication 1, caractérisé en ce qu'il comprend l'étape suivante :
c) appliquer une fine couche de colle entre la surface périphérique du rotor (10) et chacun des groupes de barres (11).

4. Rotor de moteur sans balais du type comprenant un corps de rotor cylindrique (10) ayant sa surface périphérique sensiblement recouverte d'aimants (11), un matériau en feuille (12) recouvrant la périphérie extérieure des aimants et fixé au corps du rotor (10) au moyen de clavettes (16) insérées dans une pluralité d'entailles (15) longitudinales périphériques sur la surface périphérique du corps du rotor (10), caractérisé en ce que les aimants sont formés par des groupes de barres adjacentes disposées longitudinalement (11) aimantées, selon une polarité homogène, chaque groupe étant ajusté entre des bords longitudinaux retournés (13) d'une pluralité de parties métalliques en feuille (12) aussi longues que le rotor et qui ont une largeur telle que mises ensembles elles s'étendent tout autour de la surface périphérique du rotor, chacune d'elles entre deux entailles adjacentes (15), lesdits bords (13) étant rabattus vers les barres (11) et comportant des extrémités (14) retournées appropriées à être bloquées dans les entailles (15) par les clavettes (16).

5. Rotor selon la revendication 4, caractérisé en ce que les extrémités (14) des bords longitudinaux (13) de deux parties métalliques en feuille adjacentes sont bloquées à l'intérieur de l'une de ces entailles (15).

6. Rotor selon la revendication 5, caractérisé en ce que les extrémités (14) des bords (13) sont cintrées de façon à épouser la surface des entailles (15) qui sont également cintrées.

7. Rotor selon la revendication 5, caractérisé en ce que les extrémités (14) sont quadrangulaires de même que les entailles (15) et les clavettes (16), les extrémités (19) des clavettes (16) étant bloquées axialement et radialement à l'intérieur d'encoches (18) disposées axialement dans des plaques de maintien (17) mises en place à chaque extrémité du rotor.

8. Rotor selon la revendication 4, caractérisé en ce que les entailles périphériques (15) longitudinales sont disposées autour de la surface périphérique du corps du rotor (10) selon un écartement angulaire de 60°.
